# FASCICULE DE BREVET EUROPEEN

(11) **EP 2 052 882 B1**
(45) Date de publication et mention de la délivrance du brevet: **15.02.2012**
(21) Numéro de dépôt: 08166948.3
(22) Date de dépôt: 17.10.2008
(51) Int. Cl.: B60C 23/04

(54) **Procédé de gestion d'un réseau de capteurs, réseau de capteurs et véhicule muni d'un tel réseau**
Steuerverfahren eines Sensornetzwerkes, dessen Sensornetzwerk und mit diesem Netzwerk ausgestattetes Fahrzeug
Method of managing a network of sensors, network of sensors and vehicle equipped with such a network

(30) Priorité: 23.10.2007 FR 0758499
(43) Date de publication de la demande: 29.04.2009
(73) Titulaire: Société de Technologie MICHELIN, 63000 Clermont-Ferrand (FR); Michelin Recherche et Technique S.A., 1763 Granges-Paccot (CH)
(72) Inventeur: Massoni, Sébastien, 63000 Clermont-Ferrand (FR); Rolland, Maxime, 63200 Pessat-Villeneuve (FR)
(74) Mandataire: Dequire, Philippe Jean-Marie Denis

(56) Documents cités:
- EP-A- 1 236 588
- EP-A- 1 769 948
- JP-A- 2006 021 660
- US-A1- 2005 065 681

## Description

La présente invention concerne le domaine technique du contrôle de pression de pneumatiques.

Elle s'applique en particulier, mais non exclusivement, au contrôle de pression de pneumatiques d'un tracteur ou d'une remorque de véhicule de type poids lourd, notamment au moyen d'inclinomètres.

Dans ce qui suit, on appelle « pression », la pression interne d'un pneumatique définie comme la force par unité de surface exercée par le gaz contenu dans le pneumatique sur une surface interne d'un pneumatique.

Dans un véhicule muni de roues équipées chacune d'un pneumatique, il est connu de contrôler la pression des pneumatiques au moyen d'un réseau de capteurs de pression.

Il est connu notamment d'utiliser un réseau du type comprenant :
- au moins deux noeuds formant chacun une unité de mesure directe de pression, et
- un noeud formant une unité de traitement à laquelle sont reliées les unités de mesure.

Chaque unité de mesure est généralement agencée sur la jante d'une roue correspondante. L'unité de traitement est généralement agencée sur le châssis du véhicule.

Chaque unité de mesure comprend un capteur et une unité de communication par radiofréquence comportant des moyens d'émission aptes à émettre un signal de mesure vers l'unité de traitement.

L'unité de traitement comprend une unité de communication par radiofréquence comportant des moyens de réception aptes à recevoir les signaux de mesure émis par les unités de mesure. L'unité de traitement traite, notamment grâce à des moyens de calcul, chaque signal de mesure en le comparant à un seuil. Le résultat de la comparaison permet de révéler un éventuel défaut de pression d'un pneumatique.

La gestion d'un réseau de capteurs du type précité se fait généralement en autorisant chaque unité de mesure à émettre des signaux de mesure vers l'unité de traitement de façon autonome et indépendante des autres unités de mesures.

Un tel réseau de capteurs est notamment décrit dans les documents EP 1 236 588 A, en accord avec les préambules respectifs des revendications de procédé 1 et de dispositif de réseau 10, et US 2005/065681 A1.

Ce type de gestion d'un réseau de capteurs n'est pas adapté lorsque l'on souhaite contrôler la pression des pneumatiques sans recourir à des mesures directes de la pression de chaque pneumatique. En effet, dans ce cas, on est amené à comparer entre elles des informations provenant de différents capteurs. La comparaison des informations doit se faire à des dates pertinentes, ce que ne permet pas une gestion indépendante des unités de mesures entre elles.

Le but de la présente invention est notamment de fournir un procédé de gestion optimisé d'un réseau de capteurs destiné à contrôler la pression de pneumatiques sans recourir à des mesures directes de la pression de chaque pneumatique.

A cet effet, l'invention a pour objet un procédé de gestion d'un réseau de capteurs comprenant :
- au moins deux noeuds formant chacun une unité de mesure comprenant un capteur, et
- un noeud formant une unité de traitement à laquelle sont reliées les unités de mesure,
chaque unité de mesure étant destinée à acquérir des mesures et à émettre un signal fonction de ces mesures, dit signal de mesure, vers l'unité de traitement,
caractérisé en ce que l'on synchronise entre elles des séquences d'acquisition de mesures par les unités de mesure au moyen d'un signal de synchronisation émis par l'unité de traitement vers chaque unité de mesure.

Le signal de synchronisation permet de déclencher simultanément chaque séquence d'acquisition de chaque unité de mesure. Ainsi, chaque mesure de chaque séquence d'acquisition est réalisée sensiblement simultanément par chaque unité de mesure du réseau. Les signaux émis vers l'unité de traitement comprennent alors des séquences d'acquisition synchronisées entre elles.

Notamment, le procédé selon l'invention est particulièrement avantageux, dans le cas où l'on est amené à comparer entre elles les mesures des différentes unités de mesure. En effet, en synchronisant entre elles les séquences de mesures, on peut comparer ces mesures sans avoir à tenir compte d'un éventuel décalage temporel.

Selon une caractéristique optionnelle du procédé selon l'invention, on émet un signal de synchronisation après réception par l'unité de traitement de signaux de mesure émis par l'ensemble des unités de mesure.

On évite ainsi de déclencher une nouvelle séquence d'acquisition sans avoir reçu les signaux de mesure de l'ensemble des unités de mesure.

De façon optionnelle, on émet un signal de synchronisation en cas d'absence de réception par l'unité de traitement, dans un délai d'attente prédéterminé, d'un signal de mesure attendu d'une unité de mesure.

Ainsi, on évite que l'unité de traitement attende, au delà du délai d'attente, de recevoir les signaux de l'ensemble des unités de mesure. En effet, l'unité de traitement peut ne pas recevoir le signal de mesure attendu. C'est le cas par exemple à la suite d'une acquisition défectueuse de l'unité de mesure si bien que le signal de mesure n'est pas émis. C'est le cas également lors d'une transmission défectueuse du signal de mesure vers l'unité de traitement.

Avantageusement, un signal de synchronisation antérieur ayant été émis avant ledit signal de synchronisation, le délai d'attente débute postérieurement à l'émission du signal de synchronisation antérieur, à la réception, par l'unité de traitement, d'un signal de mesure qui est, de préférence, le premier signal reçu après l'émission du signal de synchronisation antérieur.

Selon d'autres caractéristiques optionnelles du procédé selon l'invention :
- Au moins un signal de mesure est représenté par un vecteur à plusieurs coordonnées, dit vecteur de mesure.
- Chaque coordonnée du vecteur est l'image de n₀ mesures par une fonction, n₀ étant un nombre entier non nul, la fonction étant de préférence une moyenne arithmétique des n₀ mesures.
- Chaque séquence d'acquisition de mesure comprend nₑ étapes d'acquisition de n₀ mesures alternant avec nₑ étapes de calcul de l'image de ces n₀ mesures par la fonction, nₑ étant un entier non nul.
- On émet le signal de mesure après empilement des coordonnées dans une pile de moyens de stockage de l'unité de mesure et atteinte, dans la pile, d'un nombre de coordonnées égal au nombre de coordonnées du vecteur.
- L'unité de traitement calcule des différences entre des coordonnées de deux vecteurs de mesure émis par deux unités de mesure distinctes respectivement.

L'invention a également pour objet un réseau de capteurs du type comprenant :
- au moins deux noeuds formant chacun une unité de mesure comprenant un capteur, et
- un noeud formant une unité de traitement à laquelle sont reliées les unités de mesure,
chaque unité de mesure comprenant une unité de communication comprenant des moyens d'émission aptes à émettre au moins un signal de mesure, l'unité de traitement comprenant une unité de communication comprenant des moyens de réception aptes à recevoir chaque signal de mesure émis par chaque unité de mesure, **caractérisé en ce que** l'unité de traitement comprend des moyens de synchronisation de séquences d'acquisition de mesures par les unités de mesure, l'unité de communication de l'unité de traitement comprenant des moyens d'émission aptes à émettre un signal de synchronisation, et l'unité de communication de chaque unité de mesure comprenant des moyens de réception aptes à recevoir le signal de synchronisation.

Dans un tel réseau, chaque unité de communication de l'unité de traitement et de chaque unité de mesure fonctionne en émission et en réception.

Selon des caractéristiques optionnelles du réseau selon l'invention :
- L'unité de communication de l'unité de traitement est formée par un module de communication par radiofréquence apte à fonctionner selon une norme de type IEEE 802.15.4.
- L'unité de communication de chaque unité de mesure est formée par un module de communication par radiofréquence apte à fonctionner selon une norme de type IEEE 802.15.4.

La norme de type IEEE 802.15.4 permet d'utiliser une bande de fréquence de 2,45GHz exploitable avec des antennes de petites tailles. Le module est donc relativement compact. En outre, la norme IEEE 802.15.4 est particulièrement adaptée aux réseaux de capteurs et donc à l'invention. De plus, le module de communication fonctionnant selon cette norme est bon marché, présente une consommation énergétique relativement faible et permet d'obtenir une communication fiable dans un environnement fortement bruité.

Selon d'autres caractéristiques optionnelles du réseau selon l'invention :
- L'unité de communication de l'unité de traitement est formée par un module de communication par bus filaire apte à fonctionner selon un protocole de type CAN.
- L'unité de communication de chaque unité de mesure est formée par un module de communication par bus filaire apte à fonctionner selon un protocole de type CAN.

CAN est le sigle anglais pour l'expression « Controller Area Network ». Le protocole de type CAN s'applique aux réseaux dits de terrain devant pouvoir fonctionner dans un environnement sévère comme un véhicule de type poids lourd. Il permet la mise en oeuvre de réseaux aptes à fonctionner en temps réel avec un haut niveau de fiabilité, les transmissions s'effectuant physiquement par une liaison filaire, par exemple une paire filaire différentielle.

Selon d'autres caractéristiques optionnelles du réseau selon l'invention :
- Chaque unité de mesure comprend une unité de calcul comportant, de préférence, un microcontrôleur.
- Les moyens de synchronisation comprennent un microcontrôleur.
- L'unité de traitement comprend une unité de calcul comportant, de préférence, un microcontrôleur.
- L'unité de traitement comprend un microcontrôleur formant à la fois le microcontrôleur des moyens de synchronisation et le microcontrôleur de l'unité de calcul de l'unité de traitement.
- Le réseau comprend un microcontrôleur formant à la fois le microcontrôleur de l'unité de traitement et le microcontrôleur d'une unité de mesure.

Un autre objet de l'invention est un véhicule caractérisé en ce qu'il est muni d'un réseau tel que défini ci-dessus pour le contrôle de la pression de pneumatiques du véhicule.

Avantageusement, chaque capteur comprend un inclinomètre, porté par un essieu du véhicule, et destiné à mesurer, relativement à une direction, un angle d'inclinaison d'un axe de l'essieu, autour d'un axe d'inclinaison parallèle à cette direction, l'inclinomètre étant de préférence de type électrolytique.

Un tel réseau de capteurs pour le contrôle de la pression de pneumatiques du véhicule permet une communication améliorée entre chaque unité de mesure et l'unité de traitement. En effet, dans le cas d'un véhicule muni d'un réseau de capteurs de mesure directe de pression, chaque capteur est monté dans un ensemble tournant formé par la jante et le pneumatique. Le pneumatique comprend généralement une carcasse formée par des nappes métalliques. Ces nappes forment un écran à l'égard des ondes électromagnétiques détériorant la communication entre chaque unité de mesure et l'unité de traitement. Dans l'invention, chaque inclinomètre étant porté par un essieu du véhicule, la communication est de meilleure qualité.

En outre, chaque capteur n'étant pas monté dans l'ensemble tournant, l'installation d'une liaison filaire entre chaque unité de mesure et l'unité de traitement est très facile à réaliser.

De plus, l'installation d'un réseau selon l'invention n'impose pas de corriger l'équilibrage de chaque ensemble tournant. En effet, dans le cas d'un véhicule muni d'un réseau classique de capteurs de mesure directe de pression, chaque unité de mesure est montée dans l'ensemble tournant. Chaque unité de mesure forme donc une masse excentrée qu'il faut compenser par l'ajout d'une masse d'équilibrage. Or, l'invention ne requiert pas de masse d'équilibrage.

De façon optionnelle, le véhicule comprend un générateur électrique destiné à alimenter, parmi d'autres organes du véhicule, au moins une des unités de mesure.

Un tel générateur comprend, par exemple, une batterie destinée à alimenter des organes tels que des feux de signalisation du véhicule, des appareils électriques de l'habitacle, etc. Cette batterie est généralement reliée à des moyens de recharge. Le générateur permet ainsi d'augmenter la durée d'exploitation du réseau classique de capteurs. En effet, dans le cas d'un véhicule muni d'un réseau de capteurs de mesure directe de pression, chaque unité de mesure comprend généralement une pile alimentant en électricité l'unité de mesure. La masse de cette pile devant être relativement petite (pour la raison d'équilibrage de l'ensemble tournant évoquée ci-dessus), la durée d'exploitation du réseau est d'autant plus courte que la masse de la pile est petite. Dans l'invention, le générateur permet d'alimenter, a priori sans limitation de temps, chaque unité de mesure.

De plus, la batterie reliée à des moyens de recharge permet d'alimenter en permanence chaque unité de mesure afin qu'elle puisse recevoir le signal de synchronisation. En effet, chaque unité de mesure devant pouvoir recevoir en permanence un signal de synchronisation, elle doit être alimentée en permanence.

Avantageusement, le véhicule comprend un boîtier destiné à être rapporté sur un essieu du véhicule, le boîtier contenant l'unité de traitement et une unité de mesure.

L'invention sera mieux comprise à la lecture de la description qui va suivre, donnée uniquement à titre d'exemple non limitatif et faite en se référant aux dessins dans lesquels :
- la figure 1 est une vue schématique, dans un plan X, Z, d'un véhicule de type poids lourd muni de deux réseaux de capteurs selon des premier et second modes de réalisation de l'invention pour le contrôle de la pression de pneumatiques;
- la figure 2 est une vue schématique, dans un plan X, Y, de trois essieux d'un tracteur du véhicule de la figure 1 muni du réseau selon le premier mode de réalisation de l'invention;
- la figure 3 est une vue schématique en perspective d'un boîtier comprenant une unité de mesure d'un réseau de capteurs selon l'invention;
- la figure 4 est une vue schématique en perspective d'un boîtier comprenant une unité de traitement d'un réseau de capteurs selon l'invention;
- la figure 5 est un graphique représentant schématiquement plusieurs séquences de mesure successives effectuées par le réseau selon le premier mode de réalisation;
- la figure 6 est un agrandissement d'une séquence de mesure de la figure 5 ;
- la figure 7 une vue de détail, dans le plan X, Z, de deux essieux d'une remorque du véhicule de la figure 1 munie du réseau selon le second mode de réalisation de l'invention ;
- la figure 8 est un graphique représentant schématiquement plusieurs séquences de mesures successives effectuées par le réseau selon le second mode de réalisation ;
- la figure 9 est une vue similaire à celle de la figure 1 dans laquelle le véhicule est muni de deux réseaux de capteurs selon des troisième et quatrième modes de réalisation de l'invention;
- la figure 10 est une vue schématique en perspective d'un boîtier commun comprenant une unité de mesure et une unité de traitement des réseaux selon des troisième et quatrième modes de réalisation de l'invention.

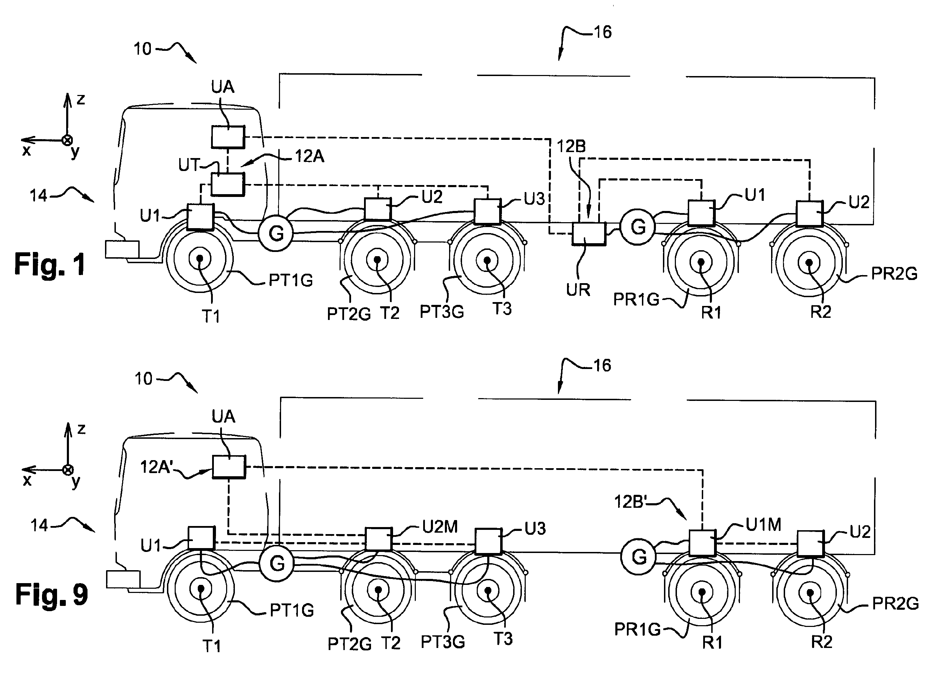

Sur les figures 1, 2, 7 et 9, on a représenté des axes X, Y, Z orthogonaux entre eux correspondant aux orientations habituelles longitudinale (X), transversale (Y) et verticale (Z) d'un véhicule.

On a représenté sur la figure 1 un véhicule de type poids lourd 10 muni de deux réseaux selon des premier et second modes de réalisation de l'invention désignés respectivement par les références 12A et 12B.

Le véhicule 10 comprend un tracteur 14 muni du réseau 12A de capteurs selon le premier mode de réalisation et une remorque 16 équipée du réseau 12B de capteurs selon le second mode de réalisation.

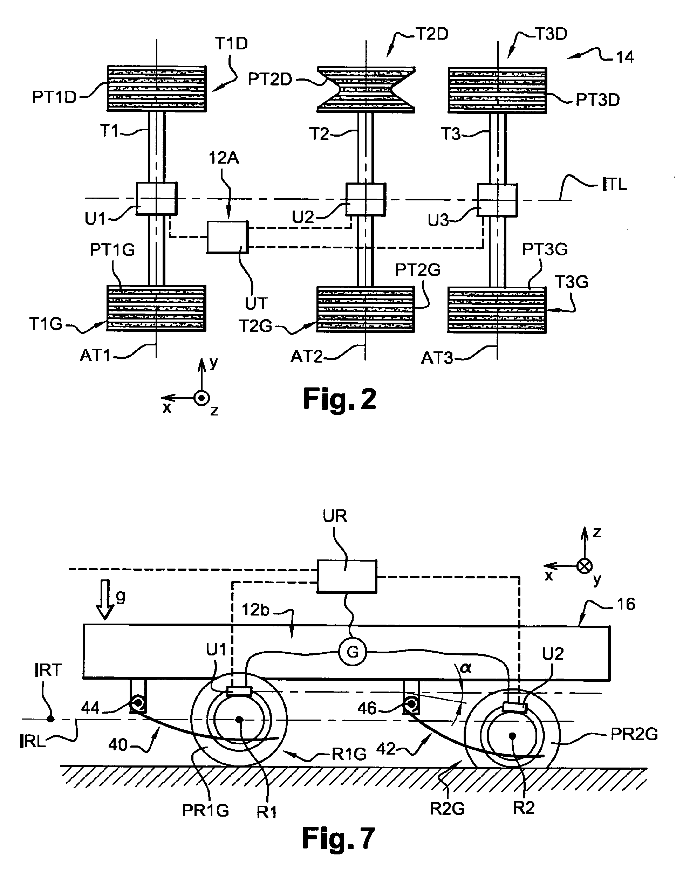

Comme représenté sur les figures 1 et 2, le tracteur 14 comprend des premier, deuxième et troisième essieux respectivement désignés par les références T1, T2 et T3. Ces trois essieux ne sont pas solidaires deux à deux.

Le premier essieu T1 porte une première paire de roues opposées transversalement. Les roues droite et gauche portées par l'essieu T1 sont désignées respectivement par les références T1D et T1G. Chaque roue T1D, T1G est équipée d'un pneumatique PT1D, PT1G. L'essieu T1 est solidaire d'un axe géométrique AT1, dit premier axe d'essieu. Cet axe géométrique AT1 passe par les centres des roues T1D, T1G de la première paire.

Les éléments relatifs aux deuxième et troisième essieux T2, T3 sont désignés par des références qui se déduisent *mutatis mutandis à* partir des références des éléments relatifs au premier essieu T1 en remplaçant dans les références « T1 » par « T2 » ou « T3 » selon le cas. Les axes d'essieu AT1, AT2 et AT3 sont sensiblement parallèles deux à deux.

Comme représenté sur les figures 1 et 7, la remorque 16 comprend des premier et deuxième essieux respectivement désignés par les références R1 et R2. Ces deux essieux R1, R2 ne sont pas solidaires entre eux.

Le premier essieu R1 porte une première paire de roues opposées transversalement. Les roues droite et gauche portées par l'essieu R1 sont désignées respectivement par les référence R1D et R1G. Chaque roue R1D, R1G est équipée d'un pneumatique PR1D, PR1G. L'essieu R1 est solidaire d'un axe géométrique AR1, dit premier axe d'essieu. Cet axe géométrique AR1 passe par les centres des roues R1D, R1G de la première paire.

Les éléments relatifs au deuxième essieu R2 sont désignés par des références qui se déduisent *mutatis mutandis à* partir des références des éléments relatif au premier essieu R1 en remplaçant dans les références « R1 » par « R2 » ou « R3 » selon le cas. Les axes d'essieu RT1 et RT2 sont sensiblement parallèles entre eux.

On décrira ci-dessous le réseau 12A selon le premier mode de réalisation de l'invention (réseau du tracteur 14).

Le réseau 12A selon le premier mode de réalisation de l'invention comprend des premier, deuxième et troisième noeuds formant respectivement des première, deuxième et troisième unités de mesure U1, U2 et U3. Le réseau 12A comprend également un noeud formant une unité de traitement UT à laquelle est reliée chaque unité de mesure U1, U2, U3. En outre, le réseau 12A comprend une unité d'affichage UA reliée à l'unité de traitement UT. En l'espèce, l'unité d'affichage UA et l'unité de traitement UT, d'une part et, l'unité de traitement UT et chaque unité de mesure, d'autre part, sont reliées par une liaison radiofréquence utilisant une bande 2,45 GHz. Les unités de mesure U1, U2, U3, l'unité de traitement UT et l'unité d'affichage UA sont alimentées en électricité par un générateur électrique G du véhicule 10. Ce générateur G alimente également en électricité d'autres organes du véhicule 10 par exemple la cabine de conduite ou les feux de signalisation du véhicule 10. Le générateur G est par exemple une batterie reliée à des moyens de recharge.

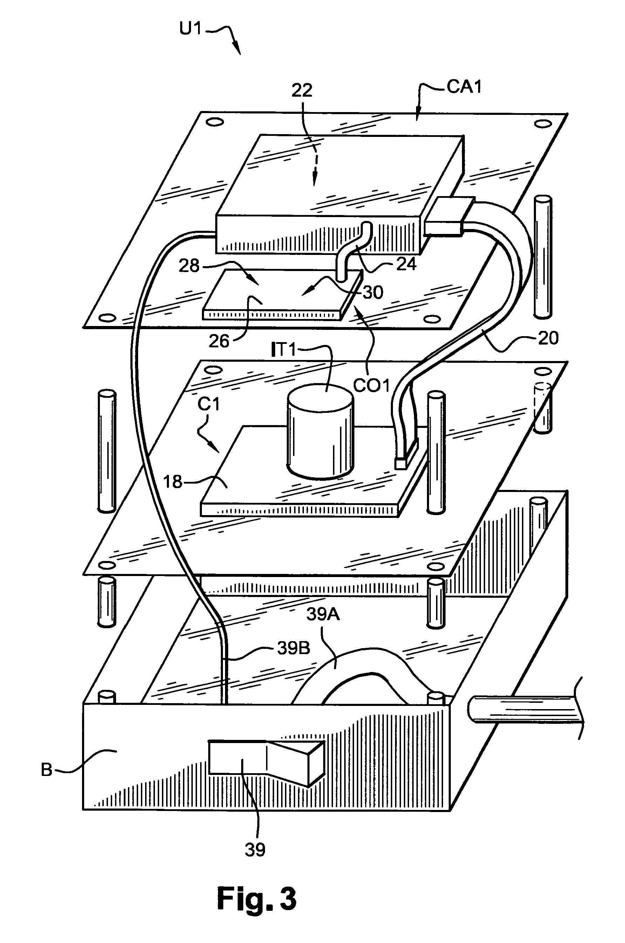

Chaque unité de mesure U1, U2, U3 est portée respectivement par les premier, deuxième et troisième essieux T1, T2 et T3. En se référant à la figure 3 où seule l'unité U1 est représentée, on voit que chaque unité de mesure U1, U2, U3 comprend un boîtier B de forme générale parallélépipédique comprenant un capteur C1, C2, C3, comprenant en l'espèce un inclinomètre IT1, IT2, IT3, une unité de communication CO1, CO2, CO3 et une unité de calcul CA1, CA2, CA3. Chaque unité U1, U2, U3 est apte à produire un signal S1, S2, S3 fonction des mesures d'angles de chaque inclinomètre IT1, IT2, IT3, dit signal de mesure.

Les inclinomètres IT1, IT2 et IT3 sont destinés chacun à mesurer, relativement à une première direction, un angle d'inclinaison, respectivement des premier, deuxième et troisième axes d'essieu AT1, AT2 et AT3, autour d'un axe d'inclinaison ITL parallèle à cette première direction. Dans l'exemple représenté aux figures 1 et 3, la première direction correspond sensiblement à une direction longitudinale du tracteur, parallèle à l'axe X. Les inclinomètres IT1, IT2 et IT3 sont, de préférence, de type électrolytique. Chaque capteur comprend également un conditionneur de signal 18 apte à mettre en forme un signal à partir de mesures d'angle réalisées par chaque inclinomètre IT1, IT2 et IT3.

Chaque capteur est relié à l'unité de calcul CA1, CA2, CA3 par l'intermédiaire d'une nappe 20 de transmission. Chaque unité de calcul CA1, CA2, CA3 comprend, entre autres, un microcontrôleur 22.

En l'espèce, chaque unité de calcul CA1, CA2, CA3 est apte à calculer un vécu d'un angle d'inclinaison sur un intervalle de temps donné, dit vécu inclinométrique. L'angle d'inclinaison est pris parmi les angles d'inclinaison des premier, deuxième et troisième axes d'essieu AT1, AT2 et AT3, autour de l'axe d'inclinaison ITL parallèle à la direction longitudinale du véhicule. Chaque vécu inclinométrique correspondant à chaque angle d'inclinaison des premier, deuxième et troisième axes d'essieu AT1, AT2 et AT3 est respectivement désigné VL1, VL2 et VL3.

Chaque unité de calcul CA1, CA2, CA3 est reliée respectivement à l'unité de communication CO1, CO2, CO3 au moyen d'une nappe 24 de transmission. En l'espèce, chaque unité de communication CO1, CO2, CO3 est formée par un module de communication 26 par radiofréquence apte à fonctionner selon une norme de type IEEE 802.15.4. Chaque unité de communication comprend des moyens d'émission 28 et des moyens de réception 30. Ce module 26 est apte à émettre, de préférence, des signaux électromagnétiques d'une puissance inférieure à 1mW. Grâce au module de communication 26, chaque unité de mesure U1, U2, U3, est apte à émettre le signal de mesure vers l'unité de traitement UT.

En variante, l'unité de communication CO1, CO2, CO3 de chaque unité de mesure est formée par un module de communication par bus filaire apte à fonctionner selon un protocole de type CAN. Optionnellement, le module de communication pourra coder les informations générées par l'unité de calcul correspondante en signaux de type CAN. Un tel module pilote est connu sous le nom anglais de « Driver CAN ». Chaque unité de communication CO1, CO2, CO3 est alors reliée à l'unité de traitement UT par une liaison filaire, par exemple, une paire filaire différentielle.

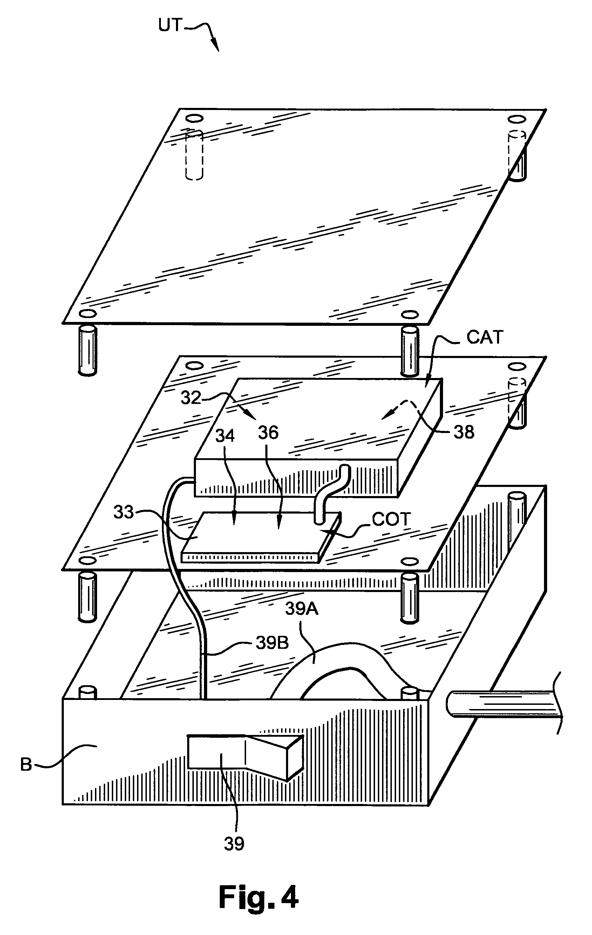

Comme représenté sur la figure 4, l'unité de traitement UT comprend une unité de communication COT, une unité de calcul CAT ainsi que des moyens 32 de synchronisation de séquences d'acquisition de mesures d'angles par les unités de mesures U1, U2, U3.

L'unité de communication COT est formée d'un module de communication 33 par radiofréquence apte à fonctionner selon une norme de type IEEE 802.15.4. L'unité de communication COT comprend des moyens d'émission 34 aptes à émettre un signal de synchronisation S et des moyens de réception 36 aptes à recevoir chaque signal de mesure émis par chaque unité de mesure U1, U2, U3. Les moyens de réception 30 de l'unité de communication CO1, CO2, CO3 de chaque unité de mesure U1, U2, U3 sont aptes à recevoir le signal de synchronisation S. Ce module 33 est apte à émettre, de préférence, des signaux électromagnétiques d'une puissance supérieure à 50 mW.

En variante, l'unité de communication COT est formée par un module de communication par bus filaire apte à fonctionner selon un protocole de type CAN. Optionnellement, le module de communication pourra être du type « Driver CAN ».L'unité de calcul CAT comprend un microcontrôleur 38 apte à traiter les signaux de mesures S1, S2, S3 de chaque unité de mesure U1, U2, U3.

Les moyens de synchronisation 32 comprennent un microcontrôleur formé par le microcontrôleur 38 de l'unité de calcul CAT. Ainsi, le microcontrôleur 38 est commun aux moyens de synchronisation 32 et à l'unité de calcul CAT.

L'unité de calcul CAT de l'unité de traitement UT est apte à calculer un indicateur, dit indicateur de déviation, à partir d'au moins deux vécus inclinométriques.

Chaque unité U1, U2, U3, UT comprend également un interrupteur 39 de commande de son alimentation électrique. Dans l'exemple, l'interrupteur 39 est relié respectivement au générateur G et au microcontrôleur 38 de chaque unité par des conducteurs 39A, 39B.

Le réseau 12A du tracteur 14 permet de contrôler la pression des pneumatiques du tracteur 14 conformément à un procédé de contrôle dont les principales étapes vont à présent être décrites.

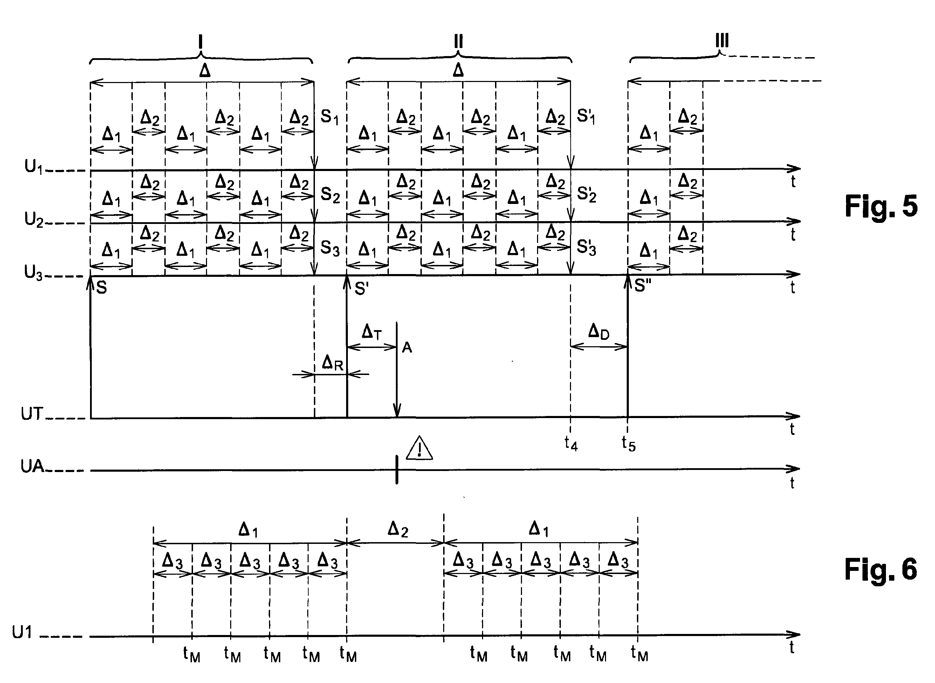

On a schématisé sur la figure 5 les opérations réalisées par les unités de mesure U1, U2, U3, l'unité de traitement UT et l'unité d'affichage UA du réseau 12A ainsi que les échanges de signaux réalisés entre ces différentes unités au cours du temps. Plus précisément, on a représenté des première et deuxième séquences d'acquisition complètes I et II et une troisième séquence d'acquisition III partielle. Les séquences I, II et III se succèdent dans cet ordre.

On calcule des premier, deuxième et troisième vécus inclinométriques V1L, VL2, VL3 relatifs à la direction longitudinale.

Le premier vécu inclinométrique VL1 est le vécu inclinométrique de l'angle, relatif à la direction longitudinale, du premier axe d'essieu AT1. Le deuxième vécu inclinométrique VL2 est le vécu inclinométrique de l'angle, relatif à la direction longitudinale, du deuxième axe d'essieu AT2. Le troisième vécu inclinométrique VL3 est le vécu inclinométrique de l'angle, relatif à la direction longitudinale, du troisième axe d'essieu AT3.

Les première, deuxième et troisième unités de mesure U1, U2, U3 acquièrent respectivement des mesures de l'angle, relatif à la direction longitudinale, des premier, deuxième et troisième axes d'essieu AT1, AT2 et AT3.

Comme illustré à la figure 5, chaque séquence de mesure I, II, III a une durée Δ et comprend nₑ étapes de calcul de n₀ mesures alternant avec nₑ étapes de calcul de l'image de ces n₀ mesures par une fonction F. n₀ et nₑ sont des nombres entiers non nuls. La fonction F est, par exemple, une moyenne arithmétique des n₀ mesures. Dans l'exemple illustré, nₑ est égal à trois et n₀ est égal à cinq.

En l'espèce, on réalise chaque étape de mesure sur un intervalle de temps Δ₁ et chaque étape d'acquisition sur un intervalle de temps Δ₂. Durant chaque étape de mesure, on mesure n₀ fois, durant l'intervalle de temps Δ₁, l'angle relatif à la direction longitudinale des axes d'essieu AT1, AT2, AT3. Les mesures d'une même étape de mesure sont espacées les unes des autres par un intervalle de temps Δ₃ constant comme cela est représenté à la figure 6.

Chaque image des n₀ mesures par la fonction F forme une coordonnée d'un vecteur V, dit vecteur de mesure. Chaque vecteur V forme le vécu inclinométrique VL1, VL2, VL3 de chaque angle d'inclinaison des premier, deuxième et troisième axes d'essieu AT1, AT2 et AT3. On empile chaque coordonnée du vecteur V dans une pile de moyens de stockage de l'unité de traitement. En l'espèce, ces moyens de stockage sont compris dans chaque unité de calcul CA1, CA2, CA3 de chaque unité de mesure U1, U2, U3. Lorsque l'on atteint, dans la pile, un nombre n₁ de coordonnées égal au nombre n₁ de coordonnées du vecteur V, en l'espèce trois, on émet le signal de mesure S1, S2, S3 vers l'unité de traitement UT. Chaque signal S1, S2, S3 est alors représenté par le vecteur V dont chaque coordonnée correspond à chaque étape d'acquisition des n₀ mesures d'angle.

L'unité de traitement UT reçoit alors chaque signal de mesure S1, S2, S3 de chaque unité de mesure U1, U2, U3. Comme cela est représenté dans la première séquence de mesure I, l'unité de traitement UT reçoit chaque signal de mesure S1, S2, S3 sur un intervalle de temps Δ_{R}.

On gère le réseau 12A du tracteur 14 conformément au procédé selon l'invention. Ainsi, en référence à la figure 5, après réception par l'unité UT des signaux S1, S2, S3 émis par l'ensemble des unités U1, U2, U3, on émet le signal de synchronisation S' vers chaque unité de mesure U1, U2, U3. On synchronise entre elles les séquences d'acquisition de mesure par les unités de mesure U1, U2, U3 au moyen du signal S' émis par l'unité UT. Dès réception du signal S' par chaque unité de mesure U1, U2, U3, chaque unité U1, U2, U3 débute la deuxième séquence de mesure II.

En outre, après réception par l'unité UT des signaux S1, S2, S3 émis par l'ensemble des unités U1, U2, U3, l'unité de traitement UT calcule, sur un intervalle de temps Δ_{T}, les indicateurs des premier, deuxième et troisième indicateurs de déviation relatifs à la première direction, respectivement désignés par λ_{T1,2}, λ_{T2,3} et λ_{T1,3}, respectivement à partir des premier et deuxième vécus inclinométriques VL1, VL2, des deuxième et troisième vécus inclinométriques VL2, VL3, et des premier et troisième vécus inclinométriques VL1, VL3.

Pour ce faire, on calcule des premier, deuxième et troisième vecteurs de déviation relatifs à la direction longitudinale, respectivement désignés par V_{T1,2}, V_{T2,3} et V_{T1,3}, respectivement à partir des premier et deuxième vécus inclinométriques VL1, VL2, des deuxième et troisième vécus inclinométriques VL2, VL3, et des premier et troisième vécus inclinométriques VL1, VL3.

En l'espèce, l'unité de traitement UT calcule chaque coordonnée de chaque vecteur de déviation V_{T1,2}, V_{T2,3}, V_{T1},₃ en calculant les différences entre les coordonnées respectives des deux vecteurs de mesure émis par les deux unités de mesures distinctes correspondantes. De façon générale, on désignera V_{Ti,j} le vecteur de déviation calculé à partir des vécus inclinométriques, relatifs à la direction longitudinale, des angles des axes d'essieux i et j. Dans l'exemple illustré, chaque vecteur de déviation V_{T1,2}, V_{T2,3}, V_{T1},₃ comprend alors n₁ coordonnées, en l'espèce trois.

Lors de séquences de mesure antérieures à la première séquence de mesure, on a stocké des premier, deuxième et troisième vecteurs de déviation VE_{T1,2}, VE_{T2,3}, VE_{T1,3} antérieurs. Chacun des vecteurs VE_{T1,2}, VE_{T2},₃, VE_{T1,3} comprend n₂ coordonnées, n₂ étant un multiple de n₁, supérieur à n₁, par exemple égal à trente. Dès que l'unité de calcul CAT a calculé les vecteurs V_{T1,2}, V_{T2,3}, V_{T1,3}, l'unité de calcul CAT supprime les n₁ coordonnées les plus anciennes de chaque vecteur de déviation antérieur VE_{T1,2}, VE_{T2,3}, VE_{T1,3} et ajoute les n₁ coordonnées calculées lors de la première séquence de mesure I. De cette façon, on calcule des nouveaux vecteurs de déviation VE_{T1,2}, VE_{T2,3}, VE_{T1,3} enrichis avec les coordonnées les plus récentes.

Puis, on retire de chaque vecteur de déviation enrichi VE_{T1,2}, VE_{T2,3}, VE_{T1,3} un nombre n₃ entier non nul de coordonnées. Ces n₃ coordonnées retirées correspondent, dans l'exemple illustré, aux coordonnées dont les valeurs sont les plus faibles et les plus élevées. Ce nombre n₃ est proportionnel au nombre n₂. En l'espèce, l'unité de traitement retire 20% des n₂ coordonnées, soit les 10% des coordonnées de valeur les plus faibles et les 10% des coordonnées de valeur les plus hautes. On obtient ainsi trois vecteurs de déviation triés T_{T1,2}, T_{T2,3}, T_{T1,3}, comprenant chacun n₄ coordonnées, en l'espèce vingt-quatre.

En variante, on pourra utiliser d'autres filtres afin d'obtenir des vecteurs de déviation triés T_{T1,2}, T_{T2,3}, T_{T1,3} à n₃ coordonnées à partir des vecteurs de déviation enrichis VE_{T1,2}, VE_{T2,3}, VE_{T1,3} à n₄ coordonnées.

Ensuite, on calcule, grâce à l'unité de calcul CAT, des moyennes arithmétiques M_{T1,2}, M_{T2,3}, M_{T1,3} des n₄ coordonnées de chaque vecteur de déviation triés T_{T1,2}, T_{T2,3}, T_{T1,3}.

Puis, on calcule, grâce à l'unité de calcul CAT, chaque indicateur de déviation λ_{T1,2}, λ_{T2,3}, λ_{T1,3} en calculant la différence entre chaque moyenne arithmétique M_{T1,2}, M_{T2,3}, M_{T1,3} et des références R_{T1,2}, R_{T2,3}, R_{T1,3} respectivement. Les références R_{T1,2}, R_{T2,3}, R_{T1,3} peuvent être calculées notamment durant une étape d'initialisation du réseau sur le véhicule. De façon préférentielle, cette étape d'initialisation du réseau correspondra à un apprentissage du réseau. Durant cette étape d'initialisation, chaque pneumatique du véhicule sera gonflé à une pression nominale prédéterminée.

Lorsque deux des indicateurs λ_{T1,2}, λ_{T2,3}, λ_{T1,3}, dépassent chacun, en valeur absolue, un seuil non nul ε_{L}, on détermine un ensemble de deux pneumatiques suspects à partir des deux indicateurs dépassant, en valeur absolue, le seuil non nul ε_{L}. On choisira le seuil ε_{L} de façon à obtenir une sensibilité souhaitée de détection d'un défaut de pression.

Dans l'exemple représenté à la figure 2, les indicateurs λT_{1,2} et λ_{T2,3} dépassent chacun, en valeur absolue, le seuil ε_{L}. L'indicateur λ_{T1,3} ne dépasse pas, en valeur absolue, le seuil ε_{L}. L'ensemble de deux pneumatiques suspects est donc formé par les deux pneumatiques portés par l'essieu commun aux deux indicateurs λ_{T1,2} et λ_{T2},₃, c'est-à-dire l'essieu T2. Les deux pneumatiques suspects sont donc PT2D et PT2G.

On détermine un pneumatique en défaut de pression parmi l'ensemble de deux pneumatiques suspects à partir d'un signe de l'un des deux indicateurs λ_{T1,2} et λ_{T2,3} dépassant, en valeur absolue, le seuil non nul ε_{L}.

En effet, lors de l'installation du réseau 12A sur le tracteur 14, on a réglé les inclinomètres IT1 et IT2 de façon que si l'indicateur λ_{T1,2} est positif, les pneumatiques T1D et T2G forment l'ensemble de deux pneumatiques suspects. A l'inverse, si l'indicateur λ_{T1,2} est négatif, les pneumatiques PT1G et PT2D forment l'ensemble de deux pneumatiques suspects. De façon analogue, on a réglé l'inclinomètre IT3 de façon que si λ_{T2,3} est positif, les pneumatiques PT2D et PT3G forment l'ensemble de deux pneumatiques suspects, et que si λ_{T2,3} est négatif, les pneumatiques PT2G et PT3D forment l'ensemble de deux pneumatiques suspects. Enfin, si l'indicateur λ_{T1,3} est positif, les pneumatiques PT1D et PT3G forment l'ensemble de deux pneumatiques suspects et, si λ_{T1,3} est négatif, les pneumatiques PT1G et PT3D forment l'ensemble de deux pneumatiques suspects.

Dans l'exemple représenté à la figure 2, le signe de λ_{T1,2} est négatif. Donc, le pneumatique en défaut sur l'essieu T2 est le pneumatique PT2D. On notera que l'on aurait pu déterminer le pneumatique en défaut à partir du signe de λ_{T2,3}. En effet, le signe de λ_{T2,3} étant positif, le pneumatique en défaut sur l'essieu T2 est bien le pneumatique PT2D.

Comme représenté sur la figure 5, l'unité de traitement UT émet un signal A vers l'unité d'affichage UA. Ce signal A permet de remettre à jour un affichage d'états de pression des pneumatiques du tracteur 14. Dans le cas présent, l'unité d'affichage UA alerte le conducteur du véhicule qu'un pneumatique, en l'espèce le pneumatique PT2D, est en défaut de pression.

Selon une variante du procédé de contrôle de pression des pneumatiques du tracteur 14, on détermine un ensemble de quatre pneumatiques suspects à partir d'un premier des deux indicateurs λ_{T1,2} et λ_{T2,3} dépassant , en valeur absolue, le seuil ε_{L}.

Ainsi, dans l'exemple représenté à la figure 2, comme l'indicateur ε_{T1,2} dépasse, en valeur absolue, le seuil ε_{L}, le pneumatique en défaut de pression se trouve soit sur l'essieu T1, soit sur l'essieu T2.

On détermine un pneumatique en défaut de pression parmi l'ensemble des quatre pneumatiques portés par les essieux T1 et T2 à partir d'un signe du second des deux indicateurs dépassant, en valeur absolue, le seuil ε_{L} non nul.

Le signe de λ_{T2,3} étant positif et le pneumatique en défaut de pression se trouvant soit sur l'essieu T1, soit sur l'essieu T2, le pneumatique en défaut de pression est donc PT2D.

En référence à la figure 5, lors de la deuxième séquence de mesure II, chaque unité de communication CO1, CO2, CO3 de chaque unité de mesure U1, U2, U3 émet chaque signal S'1, S'2, S'3 vers l'unité de traitement UT comme lors de la première séquence d'acquisition I. Chaque signal S'1, S'2, S'3 est représenté par un vecteur V_{T1,2}, V_{T2,3}, V_{T1,3} dont chaque coordonnée est la moyenne des mesures acquises durant la deuxième séquence de mesure II. Le signal de synchronisation S' émis à l'issue de la première séquence d'acquisition I est antérieur au signal de synchronisation S" émis à l'issue de la deuxième séquence d'acquisition II. Par antérieur, on fait référence au fait que le signal S' a été émis avant le signal S".

Dans l'exemple, postérieurement à l'émission du signal de synchronisation antérieur S', à la réception, par l'unité de traitement UT, d'un des signaux S'1,S'2, S'3, l'unité de traitement UT débute un délai d'attente Δ_{D}. De préférence, le signal à la réception à partir duquel l'unité de traitement débute le délai d'attente Δ_{D} est le premier signal reçu après l'émission du signal de synchronisation antérieur S', en l'espèce le signal S'1. En l'absence de réception par l'unité de traitement UT dans le délai d'attente prédéterminé Δ_{D} des signaux S'2 et/ou S'3, on émet le signal de synchronisation S".

Dans ce cas, l'unité de traitement UT n'émet pas le signal A vers l'unité d'affichage.

On décrira maintenant le réseau 12B selon le deuxième mode de réalisation de l'invention (réseau de la remorque 16). Dans ce cas, les éléments analogues à ceux du réseau 12A sont désignés par des références identiques.

Le réseau 12B selon le deuxième mode de réalisation comprend des premier et deuxième noeuds formant respectivement des première et deuxième unités de mesure U1 et U2. En outre, le réseau 12B comprend la même unité d'affichage UA que celle du réseau 12A. Cette unité d'affichage UA est reliée à l'unité de traitement UR du réseau 12B. Comme dans le réseau 12A, les première et deuxième unités de mesure U1, U2 comprennent respectivement des premier et deuxième inclinomètres IR1, IR2, portés par les premier et deuxième essieux R1, R2. Les inclinomètres IR1 et IR2 sont, de préférence, de type électrolytique.

Chaque inclinomètre IR1, IR2 est apte, comme dans le réseau 12A, à mesurer, relativement à la direction longitudinale, un angle d'inclinaison, de l'axe d'essieu portant l'inclinomètre, autour d'un axe d'inclinaison IRL parallèle à la direction longitudinale de la remorque 16.

Toutefois, dans le réseau 12B, chaque inclinomètre IR1, IR2 est destiné par ailleurs à mesurer, relativement à une seconde direction, un angle d'inclinaison α, de l'axe d'essieu portant l'inclinomètre, autour d'un axe d'inclinaison IRT parallèle à cette seconde direction. Dans le cas représenté aux figures 1, 7 et 9, la seconde direction correspond sensiblement à une direction transversale du véhicule, parallèle à l'axe Y.

Comme représenté plus en détail à la figure 7, la remorque 16 comprend deux bras de guidage 40 et 42 reliant respectivement les essieux R1et R2 au châssis. Chaque bras de guidage 40, 42 relie chaque essieu R1, R2 à un axe de rotation transversal 44, 46 lié à un châssis de la remorque 16. En l'espèce, chaque bras de guidage 40, 42 est formé d'une demi lame. Chaque bras de guidage peut aussi utiliser des bras multiples. De cette façon, les axes d'essieu AR1 et AR2 sont suspendus et sensiblement parallèles respectivement aux axes de rotation 44 et 46. Chacun des axes AR1 et AR2 peut ainsi osciller autour des axes 44 et 46. Chacun des axes 44 et 46 forme donc, pour chaque inclinomètre IR1 et IR2 porté par chacun des essieux suspendus R1 et R2, l'axe d'inclinaison IRT parallèle à la direction transversale de la remorque.

Le réseau 12B de la remorque 16 permet de contrôler la pression des pneumatiques de cette remorque 16 conformément à un procédé de contrôle dont les principales étapes vont à présent être décrites.

L'unité de calcul CAT de l'unité de traitement UR calcule des premier et deuxième vécus inclinométriques VL1, VL2 relatifs à la direction longitudinale de la remorque, des angles d'inclinaison, relatifs à cette direction longitudinale, des premier et deuxième axes d'essieu AR1, AR2. Dans ce second mode de réalisation, on calcule également des premier et deuxième vécus inclinométriques VT1, VT2 relatifs à la direction transversale de la remorque, des angles d'inclinaison, relatifs à cette direction transversale, des premier et deuxième axes d'essieux AR, AR2.

A la différence du procédé de contrôle de la pression des pneumatiques du tracteur 14, la première unité de mesure U1 acquiert des mesures de l'angle, relatif aux directions longitudinale et transversale, du premier axe d'essieu AR1. La deuxième unité de mesure U2 acquiert des mesures de l'angle, relatif aux directions longitudinale et transversale, du deuxième axe d'essieu AR2.

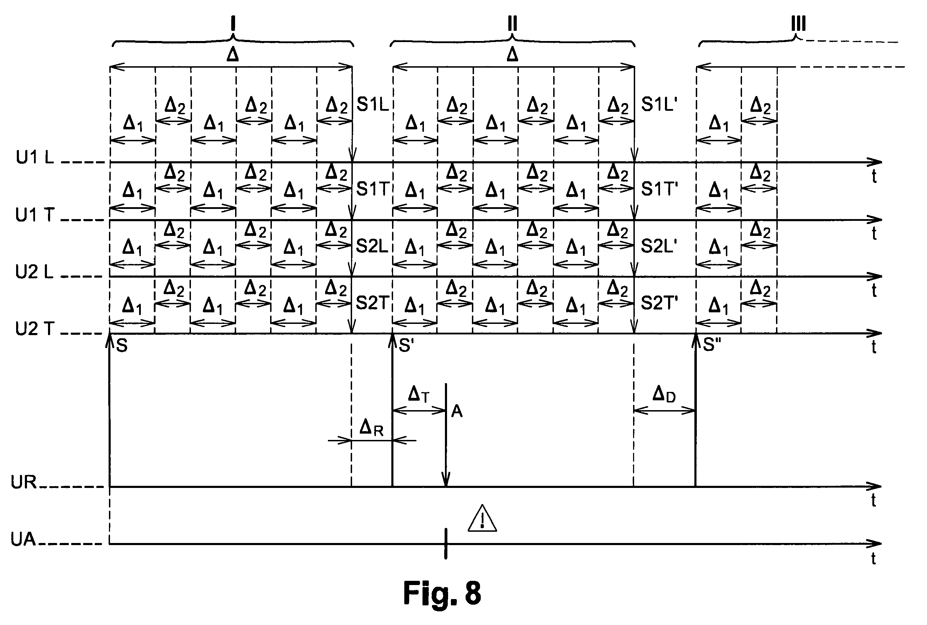

On gère le réseau 12B de la remorque 16 de façon analogue à la gestion du réseau 12A. Ainsi, on a représenté sur la figure 8 les séquences d'acquisition de chaque unité U1, U2 relativement à la direction longitudinale sur des lignes U1L, U2L. On a également représenté les séquences d'acquisition de chaque unité U1, U2 relativement à la direction transversale respectivement sur des lignes U1T, U2T. Chaque unité de mesure U1, U2 acquiert, durant chaque étape d'acquisition, n₀ mesures de chaque angle relatif à chaque direction longitudinale et transversale, puis calcule, chaque image des n₀ mesures par la fonction F.

Ainsi, l'unité de calcul CA1 calcule un vecteur de mesure formant le vécu inclinométrique VL1 de l'angle d'inclinaison du premier axe d'essieu AR1 relativement à la direction longitudinale et un vecteur de mesure formant le vécu inclinométrique VT1 de l'angle d'inclinaison du premier axe d'essieu AR1 relativement à la direction transversale. De façon analogue, l'unité de calcul CA2 calcule un vecteur de mesure formant le vécu inclinométrique VL2 de l'angle d'inclinaison du deuxième axe d'essieu AR2 relativement à la direction longitudinale et un vecteur de mesure formant le vécu inclinométrique VT2 de l'angle d'inclinaison du premier axe d'essieu AR2 relativement à la direction transversale.

De façon analogue, on émet les signaux de mesures S1L, S1T, S2L, S2T représenté par les vecteurs de mesure formant respectivement les vécus inclinométriques VL1, VT1, VL2, VT2.

Après réception des signaux S1L, S1T, S2L, S2T par l'unité de traitement UR, on calcule un vecteur de déviation relatif à la direction longitudinale, désigné par V_{R}. On calcule également un vecteur de déviation, relatif à la direction transversale, à partir des premier et deuxième vécus inclinométriques VT1, VT2 relatifs à la direction transversale, désigné par P_{R}. De façon analogue à la désignation des vecteurs V_{R}, on notera P_{Ri,j} le vecteur de déviation calculé à partir des vécus inclinométriques, relatifs à la direction transversale, des angles des axes d'essieux i et j.

Les étapes de calcul des indicateurs de déviation du réseau 12B se déduisent *mutatis mutandis* de celles du réseau 12A. En particulier, on calcule le vecteur de déviation V_{R1,2} relatif à la direction longitudinale, le vecteur de déviation P_{R1,2} relatif à la direction transversale, le vecteur de déviation enrichi VE_{R1,2} relatif à la direction longitudinale, le vecteur de déviation enrichi PE_{R1,2} relatif à la direction transversale, le vecteur de déviation trié T_{R1,2} relatif à la direction longitudinale, le vecteur de déviation trié PT_{R1,2} relatif à la direction transversale, la moyenne arithmétique M_{R1,2} relatif à la direction longitudinale, la moyenne arithmétique PM_{R1,2} relatif à la direction transversale, l'indicateur τ_{R1,2} relatif à la direction transversale et l'indicateur λ_{R1,2} relatif à la direction longitudinale.

Dans le cas d'un défaut de pression d'un pneumatique de la remorque 16, l'axe d'essieu portant ce pneumatique en défaut forme un angle autour des axes d'inclinaison IRL et IRT respectivement parallèles au directions longitudinale et transversale de la remorque 16.

Lorsque l'indicateur relatif à la direction longitudinale λ_{R1,2} dépasse, en valeur absolue, le seuil non nul ε_{L} relatif à la direction longitudinale, et lorsque l'indicateur relatif à la direction transversale τ_{R1,2} dépasse, en valeur absolue, un seuil non nul ε_{T} relatif à la direction transversale, on détermine, tout d'abord, un ensemble de deux pneumatiques suspects, à partir du signe d'un des deux indicateurs, appelé premier indicateur de référence, dépassant, en valeur absolue, le seuil ε_{L} ou ε_{T} correspondant.

En l'espèce, le premier indicateur de référence est l'indicateur λ_{R1,2} relatif à la direction longitudinale du véhicule.

Dans le cas représenté à la figure 7, l'ensemble de deux pneumatiques suspects comprend donc deux pneumatiques, transversalement opposés portés par deux essieux différents. En l'espèce, comme λ_{R1,2} est positif l'ensemble comprend les pneumatiques PR1D et PR2G.

On détermine le pneumatique en défaut de pression parmi l'ensemble de deux pneumatiques suspects PR1D et PR2G à partir du signe du second indicateur de référence P_{R1,2} dépassant, en valeur absolue, le seuil ε_{T} correspondant.

En effet, lors de l'installation du réseau 12B sur la remorque 16, on a réglé les inclinomètres IR1 et IR2 de façon analogue aux inclinomètres IT1 et IT2. De plus, on a réglé les inclinomètres IR1 et IR2 de façon que si l'indicateur P_{R1,2} est positif, les pneumatiques PR2D et PR2G forment l'ensemble de deux pneumatiques suspects. A l'inverse, si l'indicateur τ_{R1,2} est négatif, les pneumatiques PR1G et PR1D forment l'ensemble de deux pneumatiques suspects.

Comme dans l'exemple décrit τ_{R1,2} est positif, le pneumatique en défaut est le pneumatique PR2G, comme cela est représenté sur la figure 7.

Selon une variante du procédé de contrôle de pression des pneumatiques de la remorque 16, le premier indicateur de référence est l'indicateur τ_{R1,2} relatif à la direction transversale et le second indicateur de référence est l'indicateur λ_{R1,2} relatif à la direction longitudinale.

L'ensemble de deux pneumatiques suspects comprend donc deux pneumatiques, transversalement opposés portés par le même essieu. En l'espèce, comme τ_{R1,2} est positif, les deux pneumatiques suspects sont ceux portés par l'essieu R2.

De plus, comme λ_{R1,2} est positif, le pneumatique en défaut de pression est le pneumatique PR2G.

On a représenté sur la figure 9, un véhicule de type poids lourd 10 muni de deux réseaux selon des troisième et quatrième modes de réalisation de l'invention désignés respectivement par les références 12A' et 12B'. Les éléments analogues à ceux des réseaux 12A, 12B selon les premier et second modes de réalisation sont désignés par des références identiques.

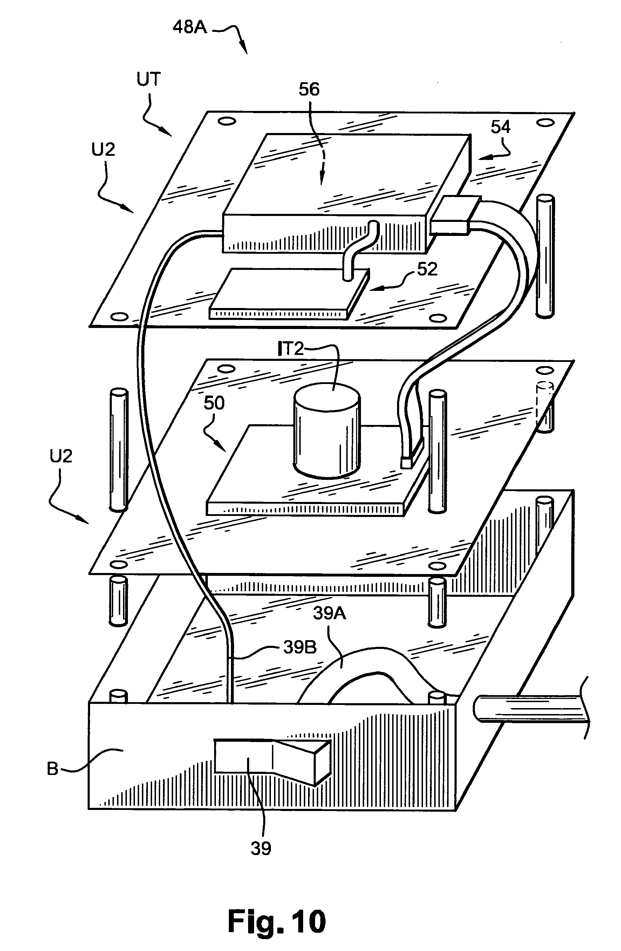

A la différence des premier et deuxième modes de réalisation, chaque réseau 12A' et 12B' comprend un boîtier 48A, 48B, illustré à la figure 10, destiné à être rapporté sur un essieu du véhicule 14, 16. Chaque boîtier 48A, 48B contient respectivement une unité mixte U2M, U1M. L'unité mixte U2M est formée par l'unité de mesure U2 du réseau 12A et par l'unité de traitement UT du réseau 12A. L'unité mixte U1M est formée par l'unité de mesure U1 du réseau 12B et par l'unité de traitement UR du réseau 12B. En se référant à la figure 10 où l'on a représenté le boîtier 48A, on voit que ce boîtier 48A comprend un capteur 50, comprenant en l'espèce un inclinomètre IT2, une unité de communication 52 et une unité de calcul commune 54.

Dans le réseau 12A', respectivement 12B', le capteur 50 de l'unité de mesure U2, respectivement U1, est relié à l'unité de calcul 54. Cette unité de calcul 54 comprend un microcontrôleur 56 formant à la fois le microcontrôleur 38 de l'unité de traitement UT, respectivement UR, et le microcontrôleur de l'unité de mesure U2, respectivement U1. Ainsi, l'unité de mesure U2, respectivement U1, ne comprend pas nécessairement de module de communication avec l'unité de traitement UT, respectivement UR. L'unité de communication 52 forme l'unité de communication COT de l'unité de traitement UT, respectivement UR.

Les réseaux 12A', 12B' permettent de contrôler la pression des pneumatiques respectivement des tracteur 14 et remorque 16.

Toutefois, à la différence des procédés de contrôle de pression précédemment décrits, l'unité de mesure U2, respectivement U1, n'émet pas de signal de mesure vers l'unité de traitement UT, respectivement UR. En effet, le microcontrôleur 56 commun à l'unité de traitement et à l'unité de mesure calcule le vecteur de mesure VL2 (pneumatiques du tracteur 14) et les vecteurs de mesure VL1, VT1 (pneumatiques de la remorque 16).

De plus, le microcontrôleur 56 émet directement le signal de synchronisation S' au capteur IT2, IR1 auquel il est relié.

L'invention ne se limite pas aux modes de réalisation précédemment décrits.

Le signal de synchronisation pourra être émis par l'unité de traitement à tout moment après réception des signaux de mesure émis par les unités de mesure. Notamment, ce signal de synchronisation pourra être émis après le traitement des signaux de mesure par l'unité de traitement.

De plus, l'unité de communication COT de l'unité de traitement du réseau du tracteur pourra être apte à recevoir le signal A émis par l'unité de communication COT de l'unité de traitement du réseau de la remorque. De cette façon, l'unité de communication COT de l'unité de traitement du réseau du tracteur a pour fonction de relayer le signal A dans le cas où l'unité de traitement du réseau de la remorque est trop éloignée de l'unité d'affichage UA.

Chaque unité de mesure pourra être alimentée électriquement de façon indépendante des autres unités de mesure par une pile.

En outre, le réseau 12B pourra également comporter une unité d'affichage complémentaire agencée sur la remorque 16 et visible depuis la cabine de conduite du tracteur 14. Cette unité d'affichage complémentaire comprend une unité de communication apte à recevoir le signal A émis par l'unité de communication de l'unité de traitement du réseau 12B. L'unité d'affichage complémentaire comprend également des moyens d'alarme, par exemple une lampe destinée à s'allumer dans le cas d'un défaut de pression d'un pneumatique de la remorque 16.

L'unité de traitement pourra également assurer d'autres fonctions, par exemple, des fonctions de gestion du freinage du véhicule ou de contrôle de sa trajectoire. Une telle unité de traitement permet de réduire le nombre de noeuds des différents réseaux montés sur le véhicule.

## Revendications

1. Procédé de gestion d'un réseau de contrôle de pression de pneumatiques (12A ; 12B ; 12A' ; 12B') de capteurs (C1, C2, C3) comprenant :
- au moins deux noeuds formant chacun une unité de mesure (U1, U2, U3) comprenant un capteur (C1, C2, C3), et
- un noeud formant une unité de traitement (UT ; UR) à laquelle sont reliées les unités de mesure (U1, U2, U3),
chaque unité de mesure (U1, U2, U3) étant destinée à acquérir des mesures et à émettre un signal (S1, S2, S3) fonction de ces mesures, dit signal de mesure, vers l'unité de traitement (UT),
**caractérisé en ce que** l'on synchronise entre elles des séquences d'acquisition de mesures (I, II, III) par les unités de mesure (U1, U2, U3) au moyen d'un signal de synchronisation (S, S', S") émis par l'unité de traitement (UT ; UR) vers chaque unité de mesure (U1, U2, U3).

2. Procédé selon la revendication 1, dans lequel on émet un signal de synchronisation (S, S') après réception par l'unité de traitement (UT ; UR) de signaux de mesure (S1, S2, S3) émis par l'ensemble des unités de mesure (U1, U2, U3).

3. Procédé selon la revendication 1, dans lequel on émet un signal de synchronisation (S") en cas d'absence de réception par l'unité de traitement (UT, UR), dans un délai d'attente prédéterminé (Δ_{D}), d'un signal de mesure (S'2, S'3) attendu d'une unité de mesure (U2, U3).

4. Procédé selon la revendication 3, dans lequel, un signal de synchronisation antérieur (S') ayant été émis avant ledit signal de synchronisation (S"), le délai d'attente (Δ_{D}) débute postérieurement à l'émission du signal de synchronisation antérieur (S'), à la réception, par l'unité de traitement (UT ; UR), d'un signal de mesure (S1') qui est, de préférence, le premier signal reçu après l'émission du signal de synchronisation antérieur (S')

5. Procédé selon l'une quelconque des revendications précédentes, dans lequel au moins un signal de mesure (S1, S2, S3) est représenté par un vecteur (V) à plusieurs coordonnées, dit vecteur de mesure.

6. Procédé selon la revendication 5, dans lequel chaque coordonnée du vecteur est l'image de nₒ mesures par une fonction (F), nₒ étant un nombre entier non nul, la fonction (F) étant de préférence une moyenne arithmétique des nₒ mesures.

7. Procédé selon la revendication 6, dans lequel chaque séquence d'acquisition de mesure (I, II, III) comprend ne étapes d'acquisition de nₒ mesures alternant avec nₑ étapes de calcul de l'image de ces nₒ mesures par la fonction, nₑ étant un entier non nul.

8. Procédé selon l'une quelconque des revendications 5 à 7, dans lequel on émet le signal de mesure (S1, S2, S3) après empilement des coordonnées dans une pile de moyens de stockage de l'unité de mesure (U1, U2, U3) et atteinte, dans la pile, d'un nombre de coordonnées égal au nombre de coordonnées du vecteur (V).

9. Procédé selon l'une quelconque des revendications 5 à 8, dans lequel l'unité de traitement (UT, UR) calcule des différences entre des coordonnées de deux vecteurs de mesure émis par deux unités de mesure distinctes (U1, U2, U3) respectivement.

10. Réseau (12A ; 12B ; 12A', 12B') de capteurs de contrôle de pression de pneumatiques du type comprenant :
- au moins deux noeuds formant chacun une unité de mesure (U1, U2, U3) comprenant un capteur, et
- un noeud formant une unité de traitement (UT ; UR) à laquelle sont reliées les unités de mesure (U1, U2 U3),
chaque unité de mesure (U1, U2, U3) comprenant une unité de communication (CO1, CO2, CO3) comprenant des moyens d'émission (28) aptes à émettre au moins un signal de mesure (S1, S2, S3), l'unité de traitement comprenant une unité de communication (COT) comprenant des moyens de réception (36) aptes à recevoir chaque signal de mesure (S1, S2, S3) émis par chaque unité de mesure, **caractérisé en ce que** l'unité de traitement comprend des moyens de synchronisation (32) de séquences d'acquisition de mesures par les unités de mesure, l'unité de communication de l'unité de traitement comprenant des moyens d'émission (34) aptes à émettre un signal de synchronisation, et l'unité de communication de chaque unité de mesure comprenant des moyens de réception (30) aptes à recevoir le signal de synchronisation.

11. Réseau (12A; 12B ; 12A', 12B') selon la revendication 10, dans lequel chaque unité de mesure comprend une unité de calcul (CA1, CA2, CA3) comportant, de préférence, un microcontrôleur (22).

12. Réseau (12A; 12B ; 12A', 12B') selon la revendication 10 ou 11, dans lequel l'unité de traitement (UT ; UR) comprend une unité de calcul (CAT) comportant, de préférence, un microcontrôleur (38).

13. Véhicule (10 ; 14 ; 16) **caractérisé en ce qu'**il est muni d'un réseau (12A ; 12B) selon l'une quelconque des revendications 10 à 12 pour le contrôle de la pression de pneumatiques du véhicule.

14. Véhicule (10 ; 14 ; 16) selon la revendication 13, dans lequel chaque capteur comprend un inclinomètre (IT1, IT2, IT3 ; IR1, IR2), porté par un essieu (T1, T2, T3 ; R1, R2) du véhicule, et destiné à mesurer, relativement à une direction, un angle d'inclinaison d'un axe de l'essieu, autour d'un axe d'inclinaison parallèle à cette direction, l'inclinomètre étant de préférence de type électrolytique.

15. Véhicule (10 ; 14 ; 16) selon la revendication 13 ou 14, comprenant un générateur (G) électrique destiné à alimenter, parmi d'autres organes du véhicule, au moins une des unités de mesure.

## Claims

1. A method of managing a network (12A; 12B; 12A'; 12B') of sensors (C1, C2, C3) monitoring tire pressure, the network comprising:
at least two nodes, each forming a measurement unit (U1, U2, U3) including a sensor (C1, C2, C3); and
a node forming a processor unit (UT; UR) to which the measurement units (U1, U2, U3) are connected;
each measurement unit (U1, U2, U3) being designed to acquire measurements and to transmit to the processor unit (UT)a signal (S1, S2, S3) that is a function of said measurements, and referred to as a measurement signal;
**characterized in that** measurement acquisition sequences (I, II, III) performed by the measurement units (U1, U2, U3) are mutually synchronized by means of a synchronization signal (S, S', S") transmitted by the processor unit (UT; UR) to each of the measurement units (U1, U2, U3).

2. The method according to claim 1, wherein a synchronization signal (S, S') is transmitted after the processor unit (UT; UR) has received measurement signals (S1, S2, S3) transmitted by all of the measurement units (U1, U2, U3).

3. The method according to claim 1, wherein a synchronization signal (S") is transmitted in the event of the processor unit (UT; UR) not receiving an expected measurement signal (S'2; S'3) from a measurement unit (U2, U3) within a predetermined waiting delay (Δ_{D}).

4. The method according to claim 3, wherein, after an earlier synchronization signal (S') has been transmitted before said synchronization signal (S"), the waiting delay (Δ_{D}) begins after the transmission of the earlier synchronization signal (S'), when the processor unit (UT; UR) receives a measurement signal (S1') that is preferably the first signal it receives after transmission of the earlier synchronization signal (S').

5. The method according to anyone of the previous claims, wherein at least one measurement signal (S1, S2, S3) is represented by a vector (V) having a plurality of coordinates and referred to as a measurement vector.

6. The method according to claim 5, wherein each coordinate of the measurement vector is an image obtained by applying a function (F) to n₀ measurements, n₀ being a non-zero integer and the function (F) preferably being an arithmetic mean of the n₀ measurements.

7. The method according to claim 6, wherein each measurement acquisition sequence (I, II, III) comprises nₑ steps of acquiring n₀ measurements alternating with nₑ steps of calculating the image of said n₀ measurements by applying the function, where nₑ is a non-zero integer.

8. The method according to anyone of claims 5 to 7, wherein the measurement signal (S1, S2, S3) is transmitted after coordinates have been stacked in a stack forming part of storage means of the measurement unit (U1, U2, U3) and after the stack reaches a number of coordinates that is equal to the number of coordinates of the vector (V).

9. The method according to anyone of claims 5 to 8, wherein the processor unit (UT; UR) calculates differences between the coordinates of two measurement vectors transmitted by two distinct respective measurement units (U1, U2, U3).

10. A network (12A; 12B; 12A'; 12B') of sensors monitoring tire pressure, the network being of the type comprising:
at least two nodes, each forming a measurement unit (U1, U2, U3) including a sensor; and
a node forming a processor unit (UT; UR) to which the measurement units (U1, U2, U3) are connected;
each measurement unit (U1, U2, U3) including a communications unit (CO1, CO2, C03) having transmission means (28) suitable for transmitting at least one measurement signal (S1, S2, S3), the processor unit including a communications unit (COT) including reception means (36) suitable for receiving each of the measurement signals (S1, S2, S3) as transmitted by each measurement unit, **characterized in that** the processor unit includes synchronization means (32) for synchronizing measurement acquisition sequences by the measurement units, the communications unit of the processor unit including transmission means (34) suitable for transmitting a synchronization signal, and the communications unit of each measurement unit including reception means (30) suitable for receiving the synchronization signal.

11. The network (12A; 12B; 12A'; 12B') according to claim 10, wherein each measurement unit includes a calculation unit (CA1, CA2, CA3) that preferably comprises a microcontroler (22).

12. The network (12A; 12B; 12A'; 12B') according to anyone of claims 10 and 11, wherein the processor unit (UT; UR) includes a calculation unit (CAT) that preferably comprises a microcontroler (38).

13. A vehicle (10; 14; 16) **characterized in that** it is provided with a network (12A, 12B) according to anyone of claims 10 to 12 for monitoring the pressure of the tires of the vehicle.

14. The vehicle (10; 14; 16) according to claim 13, wherein each sensor comprises an inclinometer (IT1, IT2, IT3; IR1, IR2), carried by an axle (T1, T2, T3; R1, R2) of the vehicle and serving to measure an angle of inclination of the axle axis relative to a direction about an inclination axis that is parallel to said direction, which inclinometer is preferably of the electrolytic type.

15. The vehicle (10; 14; 16) according to claim 13 or 14, including an electricity source (G) suitable for powering, amongst other members of the vehicle, at least one of the measurement units.

## Patentansprüche

1. Verfahren zur Verwaltung eines Netzwerks (12A; 12B; 12A'; 12B') von Reifendruckkontrollsensoren (C1, C2, C3), das enthält:
- mindestens zwei Knoten, die je eine einen Sensor (C1, C2, C3) enthaltende Messeinheit (U1, U2, U3) bilden, und
- einen Knoten, der eine Verarbeitungseinheit (UT; UR) bildet, mit der die Messeinheiten (U1, U2, U3) verbunden sind,
wobei jede Messeinheit (U1, U2, U3) dazu bestimmt ist, Messungen zu erfassen und ein von diesen Messungen abhängendes Signal (S1, S2, S3), Messsignal genannt, an die Verarbeitungseinheit (UT) zu senden,
**dadurch gekennzeichnet, dass** die Erfassungsfolgen von Messungen (I, II, III) durch die Messeinheiten (U1, U2, U3) mittels eines Synchronisationssignals (S, S', S") miteinander synchronisiert werden, das von der Verarbeitungseinheit (UT; UR) an jede Messeinheit (U1, U2, U3) gesendet wird.

2. Verfahren nach Anspruch 1, bei dem nach Empfang von von der Gruppe der Messeinheiten (U1, U2, U3) gesendeten Messsignalen (S1, S2, S3) durch die Verarbeitungseinheit (UT; UR) ein Synchronisationssignal (S, S') gesendet wird.

3. Verfahren nach Anspruch 1, bei dem im Fall des fehlenden Empfangs eines von einer Messeinheit (U2, U3) erwarteten Messsignals (S' 2, S' 3) innerhalb einer vorbestimmten Wartefrist (Δ_{D}) durch die Verarbeitungseinheit (UT, UR) ein Synchronisationssignal (S") gesendet wird.

4. Verfahren nach Anspruch 3, bei dem, wenn ein früheres Synchronisationssignal (S') vor dem Synchronisationssignal (S") gesendet wurde, die Wartefrist (Δ_{D}) nach dem Senden des früheren Synchronisationssignals (S') bei Empfang eines Messsignals (S1') durch die Verarbeitungseinheit (UT; UR) beginnt, das vorzugsweise das erste nach dem Senden des früheren Synchronisationssignals (S') empfangene Signal ist.

5. Verfahren nach einem der vorhergehenden Ansprüche, bei dem mindestens ein Messsignal (S1, S2, S3) durch einen Vektor (V) mit mehreren Koordinaten dargestellt wird, Messvektor genannt.

6. Verfahren nach Anspruch 5, bei dem jede Koordinate des Vektors die Abbildung von nₒ Messungen durch eine Funktion (F) ist, wobei nₒ eine ganze Zahl ungleich Null ist, wobei die Funktion (F) vorzugsweise ein arithmetisches Mittel der nₒ Messungen ist.

7. Verfahren nach Anspruch 6, bei dem jede Messungserfassungsfolge (I, II, III) nₑ Erfassungsschritte von nₒ Messungen enthält, die mit nₑ Berechnungsschritten der Abbildung dieser nₒ Messungen durch die Funktion abwechseln, wobei nₑ eine ganze Zahl ungleich Null ist.

8. Verfahren nach einem der Ansprüche 5 bis 7, bei dem das Messsignal (S1, S2, S3) nach Stapelung der Koordinaten in einem Stapel von Speichereinrichtungen der Messeinheit (U1, U2, U3) und Erreichen, in dem Stapel, einer Anzahl von Koordinaten gleich der Anzahl der Koordinaten des Vektors (V) gesendet wird.

9. Verfahren nach einem der Ansprüche 5 bis 8, bei dem die Verarbeitungseinheit (UT, UR) Differenzen zwischen den Koordinaten von zwei Messvektoren berechnet, die von zwei unterschiedlichen Messeinheiten (U1, U2, U3), gesendet werden.

10. Netzwerk (12A; 12B; 12A', 12B') von Reifendruckkontrollsensoren, das enthält:
- mindestens zwei Knoten, die je eine einen Sensor enthaltende Messeinheit (U1, U2, U3) bilden, und
- einen Knoten, der eine Verarbeitungseinheit (UT; UR) bildet, mit der die Messeinheiten (U1, U2, U3) verbunden sind,
wobei jede Messeinheit (U1, U2, U3) eine Kommunikationseinheit (CO1, CO2, CO3) enthält, die Sendeeinrichtungen (28) enthält, welche mindestens ein Messsignal (S1, S2, S3) senden können, wobei die Verarbeitungseinheit eine Kommunikationseinheit (COT) enthält, die Empfangseinrichtungen (36) enthält, welche jedes Messsignal (S1, S2, S3) empfangen können, das von jeder Messeinheit gesendet wird, **dadurch gekennzeichnet, dass** die Verarbeitungseinheit Synchronisationseinrichtungen (32) von Erfassungsfolgen von Messungen durch die Messeinheiten enthält, wobei die Kommunikationseinheit der Verarbeitungseinheit Sendeeinrichtungen (34) enthält, die ein Synchronisationssignal senden können, und die Kommunikationseinheit jeder Messeinheit Empfangseinrichtungen (30) enthält, die das Synchronisationssignal empfangen können.

11. Netzwerk (12A; 12B; 12A'; 12B') nach Anspruch 10, bei dem jede Messeinheit eine Recheneinheit (CA1, CA2, CA3) enthält, die vorzugsweise einen Mikrocontroller (22) aufweist.

12. Netzwerk (12A; 12B; 12A'; 12B') nach Anspruch 10 oder 11, bei dem die Verarbeitungseinheit (UT; UR) eine Recheneinheit (CAT) enthält, die vorzugsweise einen Mikrocontroller (38) aufweist.

13. Fahrzeug (10; 14; 16), **dadurch gekennzeichnet, dass** es mit einem Netzwerk (12A; 12B) nach einem der Ansprüche 10 bis 1 2 für die Reifendruckkontrolle des Fahrzeugs ausgestattet ist.

14. Fahrzeug (10; 14; 16) nach Anspruch 13, bei dem jeder Sensor einen Neigungsmesser (IT1, IT2, IT3; IR1, IR2) enthält, der von einer Radachse (T1, T2, T3; R1, R2) des Fahrzeugs getragen wird und dazu bestimmt ist, bezüglich einer Richtung einen Neigungswinkel einer Achse der Radachse um eine Neigungsachse parallel zu dieser Richtung zu messen, wobei der Neigungsmesser vorzugsweise vom elektrolytischen Typ ist.

15. Fahrzeug (10; 14; 16) nach Anspruch 13 oder 14, das einen elektrischen Generator (G) enthält, der dazu bestimmt ist, unter anderen Organen des Fahrzeugs mindestens eine der Messeinheiten zu speisen.
